**Europäisches Patentamt**

**European Patent Office**

**Office européen des brevets**

(19)

(11) Veröffentlichungsnummer : **0 126 735 B2**

(12) # NEUE EUROPÄISCHE PATENTSCHRIFT

(45) Veröffentlichungstag der neuen Patentschrift :
**08.04.92 Patentblatt 92/15**

(51) Int. Cl.$^5$ : **H01S 3/041,** H01S 3/0971

(21) Anmeldenummer : **83903509.4**

(22) Anmeldetag : **01.11.83**

(86) Internationale Anmeldenummer :
**PCT/EP83/00285**

(87) Internationale Veröffentlichungsnummer :
**WO 84/02039 24.05.84 Gazette 84/13**

(54) **VORRICHTUNG ZUR ERZEUGUNG VON LASERSTRAHLUNG.**

(30) Priorität : **13.11.82 DE 3242085**

(43) Veröffentlichungstag der Anmeldung :
**05.12.84 Patentblatt 84/49**

(45) Bekanntmachung des Hinweises auf die
Patenterteilung :
**16.09.87 Patentblatt 87/38**

(45) Bekanntmachung des Hinweises auf die
Entscheidung über den Einspruch :
**08.04.92 Patentblatt 92/15**

(84) Benannte Vertragsstaaten :
**AT BE CH FR GB LI NL SE**

(56) Entgegenhaltungen :
**DE-A- 2 033 825**
**DE-A- 2 737 226**
**DE-A- 2 753 304**
**JP-A-56 029 362**

(56) Entgegenhaltungen :
**Journal of Physics E-Scientific Instruments,**
**volume 13, No. 5, 05 May 1980, LONDON (GB)**
**C.B. HATCH: "A compact, resistive-electrode**
**HF laser suitable for optical studies of semi-**
**conductor", see figure 1**
**Patents Abstracts of Japan, volume 6, No. 243**
**(E-145) 02 December 1982,**
**Optics Communication, volume 44, No. 2, De-**
**cember 1982, Amsterdam (NL) G.J. Erust: "A**
**10 cm aperture, high quality TEA CO2, Laser"**
**see paragraph 2; figure 2**
**Appl. Optics, Vol. 19, Nr. 6, 15.03.80, S. 951**
**Appl. Physics Letters, Vol. 41, Nr. 7, Jan. 1982,**
**S. 601, 602**
**JOSA, 68, No. 5, May 1978, S 673**
**Optics Communications, Vol. 27, No. 1, Oct.**
**1978, S. 105-110**

(73) Patentinhaber : **TZN Forschungs- und**
**Entwicklungszentrum Unterlüss GmbH**
**Neuensothriether Strasse 20**
**W-3104 Unterlüss (DE)**

(72) Erfinder : **GÜRS, Karl**
**Weissdornweg 23**
**W-6236 Eschborn 2 (DE)**
Erfinder : **HANSEN, Erich**
**Beethovenstrasse 2**
**W-6232 Bad Soden (DE)**

**EP 0 126 735 B2**

## Beschreibung

Die Erfindung betrifft eine Vorrichtung zur Erzeugung von Laserstrahlung, mit einer aus isolierendem Material hergestellte Entladungskammer im wesentlichen rechteckigen Querschnitts, einem Paar Entladungselektroden, zwischen denen eine durch UV-Vorionisierung mittels Koronaentladung unterstützte Gasentladung transversal zum optischen Resonator erzeugbar ist, sowie einen Lade- und Entladekreis und einem Gasumwälz- und Kühlsystem.

Transversal angeregte Impulslaser arbeiten vorzugsweise bei Atmosphärendruck und sind als TEA-Laser (transversely excited atmospheric pressure laser) bekannt. Solche Laser haben einen guten Wirkungsgrad und gute Ausstrahlungseigenschaften, wenn die Anregung das Volumen zwischen den Elektroden gleichmässig erfasst und sich nicht zu einem Funken zusammenzieht. Eine gleichförmige Entladung lässt sich erreichen, wenn man das Lasergas vorionisiert. In Betracht kommen hierfür Doppelpulsentladungen und Vorionisierung durch Elektronenstrahl oder UV-Licht, wobei das UV-Licht in einer Koronaentladung entstehen kann.

Es ist auch bekannt, dass man auf spezielle Vorrichtungen zur Vorionisierung verzichten kann, wenn normale Metallteile der Konstruktion an einer Elektrode isoliert vorbeiführen und auf dem Potential der Gegenelektrode liegen (Optical Engineering 15 (1976) 17-19, H. Jetter, K. Gürs, DE-OS 31 18 868). Auch in diesem Fall bildet sich eine Koronaentladung aus und emittiert UV-Licht. Bei diesem Laser nach DE-OS 31 18 868 stehen sich zwei Elektroden gegenüber, zwischen denen das Lasergas hindurchströmt. Dies ermöglicht einen Laserbetrieb mit hoher Impulsfrequenz. Die untere Elektrode wird durch isolierte Stangen gehalten, die gleichzeitig der Stromzuführung dienen. Sie führen an der oberen Elektrode vorbei und liegen auf dem Potential der unteren Elektrode, so dass sich eine Koronaentladung ausbilden kann. Nachteil dieser Anordnung ist der relativ grosse technische Aufwand, der mit der Befestigung der zweiten Elektrode auf Stangen und der sicheren Isolierung dieser Stangen gegenüber der ersten Elektrode verbunden ist.

Der vorliegenden Erfindung liegt nun die Aufgabe zugrunde, einen TEA-Laser mit schneller Pulsfolge zu entwickeln, bei dem die Nachteile bekannter Anordnungen nich auftreten und die Ausbildung der Koronaentladung ohne grossen technischen Aufwand möglich ist.

Diese Aufgabe ist erfindungsgemäss durch die im Anspruch 1 angegebenen Merkmale gelöst. Vorteilhafte Ausbildungen der erfindungsgemässen Vorrichtung sind in den Unteransprüchen 2 bis 9 erläutert.

Ein Ausführungsbeispiel der Erfindung wird anhand beiliegender Zeichnungen näher erläutert. Es zeigt in schematischer Vereinfachung

Fig. 1 Im Schnitt quer zur Resonatorachse die mit Metallbelegungen und Leiterstrukturen versehene Entladungskammer.

Fig. 2 Eine mögliche Anbringung der Leiterstrukturen, Seitenansicht.

Fig. 3 Die in Fig. 1 gezeigte Anordnung mit angrenzendem Gasumwälz- und Kühlsystem.

Fig. 4 Eine mögliche Ausführungsform für die Trennwand zwischen der Entladungskammer und dem Gasumwälz- und Kühlsystem.

Fig. 5 Eine weitere Ausführungsform, bei der das Gasumwälz- und Kühlsystem und die Entladungskammer zwei separate Einheiten darstellen, die miteinander gasdicht verbunden sind.

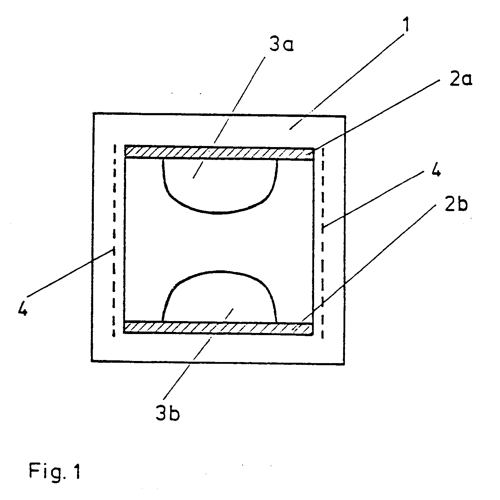

in Figur 1 wird eine Laserkammer 1 mit im wesentlichen quadratichen oder rechteckigem Querschnitt dargestellt. Zwei gegenüberliegende Flächen der Entladungskammer 1 tragen Metallbelegungen 2a und 2b, z.B. Metallplatten oder -bleche, auf denen die Elektroden 3a und 3b sitzen.

Die Kammer 1 ist aus einem isolierenden Material, z.B. Keramik oder Kunststoff hergestellt. Als Kunststoffe sind z.B. Plexiglas (WZ), Polypropylen oder Teflon (WZ) geeignet. In die Seitenwände der Kammer 1 ist in geringem Abstand zur inneren Oberfläche (einige Millimeter) auf beiden Seiten ein Drahtnetz 4 eingelassen, das auf beiden Seiten, d.h. oben und unten, bis auf die Höhe der Metallplatten 2a und 2b reicht.

Wie sich gezeigt hat, entsteht in dieser Ausführungsform bei schnellem Anlegen einer Spannung an die Rogowski-Elektroden und an die Seitenwände entlang dem Drahtnetz 4 im Inneren der Laserkammer 1 eine Koronaentladung, die UV-Licht abgibt und für eine sehr gleichförmige Entladung sorgt.

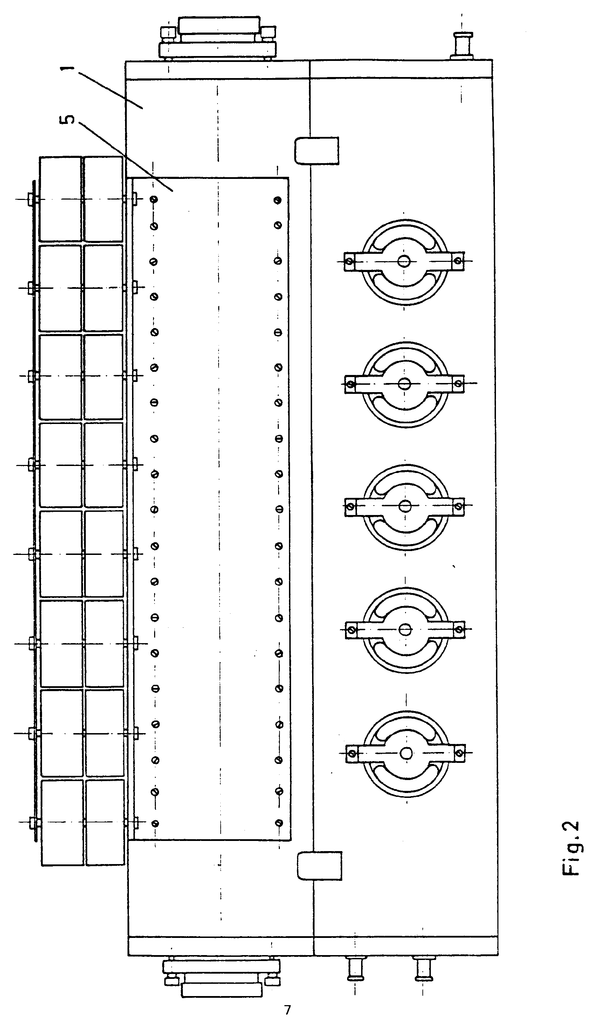

Die Drahtnetze 4 erlauben bei Herstellung der Entladungskammer aus einem transparenten isolierenden Material eine Beobachtung der Gasentladung von aussen. Ansonsten lassen sich die beiden Drahtnetze 4 auch durch Metallfolien oder -platten 5 ersetzen, die auch aussen angebracht werden können, wie es z.B. in Fig. 2 in Seitenansicht dargestellt ist. Jedoch ist zu beachten, dass die isolierende Schicht zwischen Drahtnetz 4 bzw. Folie und Innenwand der Entladungskammer 1 nicht zu gross werden darf, so dass sich auch aus Gründen der mechanischen Stabilität wie angegeben das Einbetten der Drahtnetze 4 bzw. Folien empfiehlt. Damit lösen sich auch Probleme der Isolierung und der Befestigung, und die Konstruktion wird besonders einfach und billig.

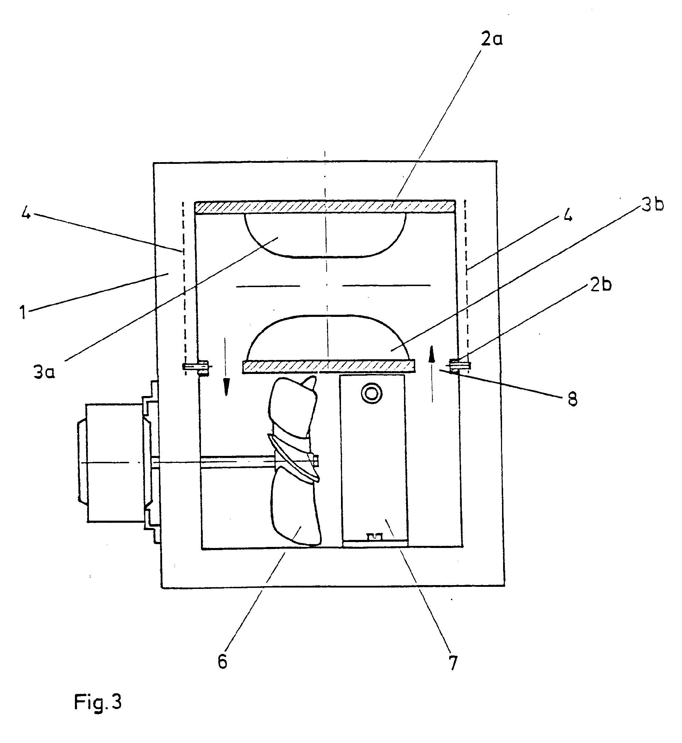

In einer entsprechenden Konstruktion für schnelle Impulsfolge wird das Lasergas rasch mit Lüftern 6 umgewälzt und über einen Kühler 7 geleitet, wie es in Fig. 3 gezeigt ist. Das Gasumwälzund Kühlsystem 6 und 7 wird angrenzend in die eine Elektrode 3b tragende Wand der Entladungskammer 1 angeordnet. Die Anordnung des Gasumwälz- und Kühlsystems wird in Seitenansicht auch in Fig. 2 dargestellt. Die Trennwand und Metallbelegung 2b wird in dem von der Elektrode 3b nicht bedeckten Bereich mit Durchbrüchen 8 versehen, damit das Lasergas auf einer Seite der Elektrode zugeführt und auf der anderen Seite abgezogen werden kann.

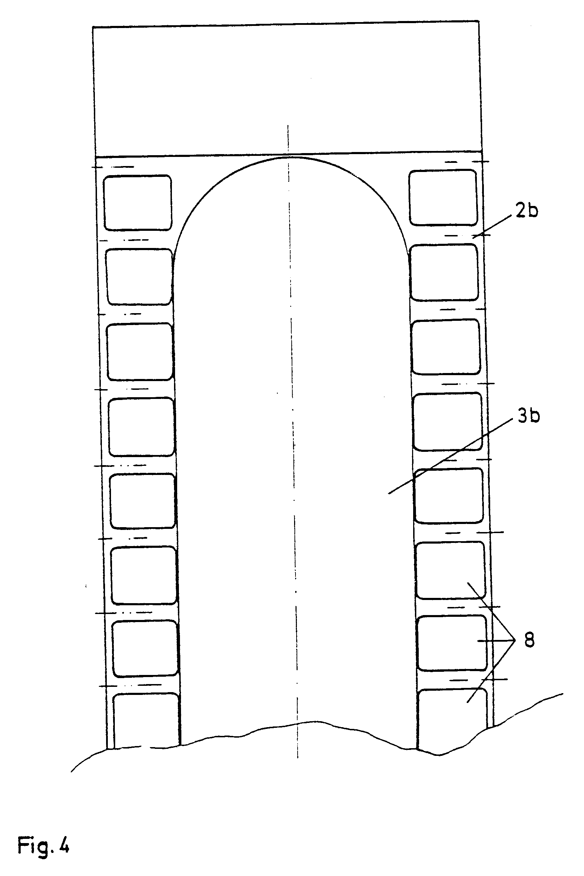

Eine solche Ausführung ist in Fig. 4 verdeutlicht, in der entlang der Elektrode 3b die Trennwand solche Durchbrüche 8 aufweist. Statt einer Reihe von Axiallüftern kommt auch ein Radiallüfter passender Länge für diese Anwendung in Betracht. Dabei kann auf der Seite der Durchbrüche die Kunststoffwischenwand eingespart werden, so dass die Elektrode 3b allein von dem als Trennwand dienenden Metallblech 2a getragen wird. Zur Verstärkung der Koroanentladung kann das Drahtnetz 4 auf beiden Seiten mit einer der beiden Metallplatten 2b leitend verbunden werden (Fig. 3).

Für verschiedene Anwendungen mit grosser mechanischer Beanspruchung des Lasers hat es sich als zweckmässig erwiesen, Laserteil und Lüfterteil mit Kühler in Modulbauweise auszuführen. Beide Teile können durch Lösen von Klammern voreinander getrennt werden. In dieser Version ist der erfindungsgemässe Laser besonders wartungsfreundlich.

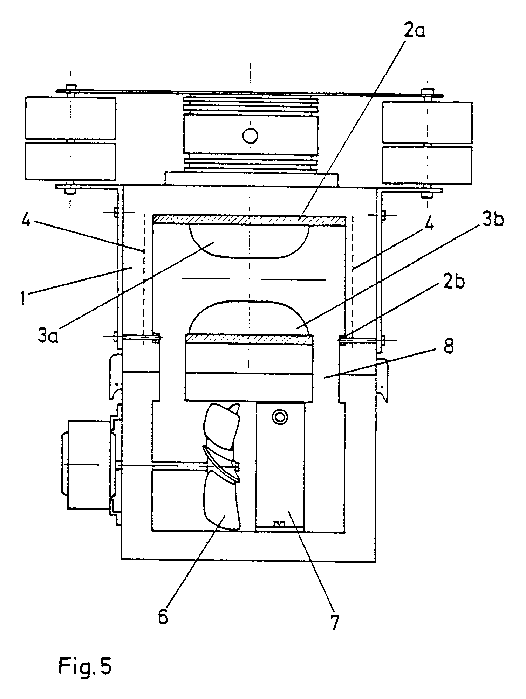

Fig. 5 zeigt einen solchen Laser mit Entladekondensatoren und Funkenstrecke zum Zünden der Gasentladung im Querschnitt. Aufgrund des symmetrischen Aufbaus der Laserkammer können die Kondensatoren und Funkenstrecke symmetrisch angeordnet werden. Auf diese Weise ergibt sich ein sehr induktivitätsarmer Entladungskreis und eine sehr kurze Entladungsdauer. Auch dieser Umstand trägt dazu bei, dass der erfindungsgemässe Laser eine sehr homogene Gasentladung aufweist und infolge davon die erzeugten Impulse sehr gut reproduzierbar sind und entsprechend gute Strahleigenschaften haben.

Selbstverständlich besteht keine Notwendigkeit, Laserkammer und Kammer für Lüfter und Kühler gleich gross zu machen. Vielmehr sind die relative Grösse den jeweiligen Erfordernissen (Pulsfolgefrequenz bzw. Strömungsgeschwindigkeit und Kühlleistung sowie Gasvorrat) anzupassen.

## Patentansprüche

1. Vorrichtung zur Erzeugung von Laserstrahlung mit einer aus isolierendem Material hergestellten Entladungskammer im wesentlichen rechteckigen Querschnitts, einem Paar Entladungselektroden, zwischen denen eine durch UV-Vorionisierung mittels Koronaentladung unterstützte Gasentladung transversal zum optischen Resonator erzeugbar ist, sowie einem Lade- und Entladekreis und einem Gasumwälz- und Kühlsystem, **dadurch gekennzeichnet**, daß die zwei gegenüberliegenden Flächen der Entladungskammer (1), auf denen die Elektroden (3a,3b) angeordnet sind, mit einer Metallbelegung (2a,2b) versehen sind, und daß die verbleibenden Seitenwände der Entladungskammer gegen den Innenraum isolierte Leiterstrukturen (4; 5) tragen, die sich beiderseits bis auf die Höhe der Metallbelegung (2a,2b) erstrecken, daß das Gasumwälz- und Kühlsystem (6, 7) angrenzenend an die eine Elektrode (3b) tragende Wand der Entladungskammer (1) angeordnet ist, und daß diese Trennwand und die Metallbelegung (2b) zwischen der Entladungskammer (1) und dem Gasumwälz- und Kühlsystem (6, 7) in dem von der Elektrode (3b) nicht bedeckten Bereich mit Durchbrüchen (8) versehen sind, durch die das Lasergas strömt.

2. Vorrichtung nach Anspruch 1, dadurch gekennzeichnet, dass die Metallbelegung (2) aus Metallplatten oder -blechen besteht.

3. Vorrichtung nach Anspruch 1 oder 2, dadurch gekennzeichnet, dass beide Leiterstrukturen (4) mit einer der beiden Metallbelegungen (2) leitend verbunden sind.

4. Vorrichtung nach einem der Ansprüche 1 bis 3, dadurch gekennzeichnet, dass als Leiterstrukturen Drahtnetze (4) verwendet sind.

5. Vorrichtung nach einem der Ansprüche 1 bis 3, dadurch gekennzeichnet, dass als Leiterstrukturen Metallfolien, -bleche oder -platten (5) verwendet sind.

6. Vorrichtung nach einem der Ansprüche 1 bis 5, dadurch gekennzeichnet, dass die Leiterstrukturen (2) in einem für die Isolierung ausreichendem Abstand von der inneren Oberfläche der Entladungskammer (1) in die Seitenwände der Entladungskammer (1) eingebettet sind.

7. Vorrichtung nach einem der Ansprüche 1 bis 5, dadurch gekennzeichnet, dass die Leiterstrukturen (5) aussen an der Entladungskammer (1) angebracht sind.

8. Vorrichtung nach einem der Ansprüche 2 bis 7, **dadurch gekennzeichnet**, daß die eine Elektrode (3b) tragende Kammerwandung aus isolierendem Material weggelassen ist und die Metallplatte (2b) oder das Metallblech die Trennwand bildet.

9. Vorrichtung nach einem der Ansprüche 1 bis 8, **dadurch gekennzeichnet**, daß die Entladungskammer (1) und das Gasumwälz- und Kühlsystem (6, 7) zwei getrennte Einheiten bilden, die miteinander gasdicht verbunden sind.

## Claims

1. Apparatus for the generation of laser radiation comprising a discharge chamber of essentially rectangular cross section made from insulating material, one pair of discharge electrodes between which a gas discharge, initiated by UV pre-ionization arising from a corona discharge, can be produced in a direction transverse to the optical resonator, as well as a charging and discharging circuit and a gas circulation and cooling system, characerised in that the two opposite walls of the discharge chamber (1) on which the electrodes (3a,3b) are arranged are provided with a metal layer (2) and the remaining lateral walls of the discharge chamber are provided with conducting structures (4,5) which are insulated against the interior space and extend on both sides up to the level of the metal layer (2a,2b), and that the gas circulation and cooling system (6,7) is arranged adjacent to the wall of the discharge chamber (1) carrying an electrode (3b), with the partition wall and the metal layer (2b) between the discharge chamber (1) and the gas circulation and cooling system (6,7) which is not covered by the electrode (3b), being provided with openings (8) through which the laser gas flows.

2. Apparatus as claimed in Claim 1, characterised in that the metal layer (2) comprises metal plates or sheets.

3. Apparatus as claimed in Claim 1 or 2, characterised in that both conducting structures (4) are in electrical contact with one of the metal layers (2).

4. Apparatus as claimed in any of Claims 1 to 3 characterised in that wire grids (4) are used as conducting structures.

5. Apparatus as claimed in any of Claims 1 to 3 characterised in that metal foils, sheets or plates (5) are used as conducting structures.

6. Apparatus as claimed in any of Claims 1 to 5, characterised in that the conducting structures (2) are embedded in the lateral walls of the discharge chamber (1) at a distance from the inner surface of the discharge chamber (1) which is sufficient for insulation.

7. Apparatus as claimed in any of Claims 1 to 5, characterised in that the conducting structures (5) are mounted on the outside of the discharge chamber (1).

8. Apparatus as claimed in any of Claims 2 to 7, characterised in that the chamber wall of insulating material which carries an electrode (3b) is omitted and wherein the partition wall is formed by the metal plate (2b) or the metal sheet.

9. Apparatus as claimed in any of Claims 1 to 8 characterised in that the discharge chamber 1 and the gas circulation and cooling system (6,7) form two separate gas-tight connected units.

## Revendications

1. Dispositif pour la production d'un rayonnement laser, comportant une chambre de décharge faite d'un matériau isolant, de section essentiellement rectangulaire, une paire d'électrodes de décharge entre lesquelles il peut être produit une décharge de gaz assistée, transversalement au résonateur optique, au moyen d'une décharge Corona par une pré-ionisation UV, ainsi qu'un circuit de charge et de décharge et d'un système de circulation de gaz et de refroidissement, caractérisé en ce que les deux surfaces opposées de la chambre de décharge (1), sur lesquelles sont montées les électrodes (3a, 3b) sont pourvues d'une garniture métallique (20, 26) et que les parois latérales restantes de la chambre de décharge portent des structures conductrices (4, 5) isolées par rapport à l'espace intérieur, qui s'étendent des deux côtés, jusqu'à la hauteur de la garniture métallique (20, 26), et en ce que le système de circulation du gaz et de refroidissement (6, 7) est monté adjacent à la paroi de la chambre de décharge (1) qui porte l'une des électrodes (3b), et que la cloison de séparation et la garniture métallique (2b) sont pourvues entre la chambre de décharge (1) et le système de circulation du gaz et de refroidissement (6, 7), dans la zone non recouverte par les électrodes (3b), de passages de communication (8), par où s'écoule le gaz laser.

2. Dispositif selon la revendication 1, caractérisé en ce que la garniture métallique (2) est faite de plaques ou de tôles métalliques.

3. Dispositif selon l'une des revendications 1 et 2, caractérisé en ce que les deux structures conductrices (4) sont reliées d'une façon conductrice avec l'une des deux garnitures (2) métalliques.

4. Dispositif selon l'une des revendications 1 à 3, caractérisé en ce que l'on utilise comme structures conductrices, des treillis (4) de fils métalliques.

5. Dispositif selon l'une des revendications 1 à 3, caractérisé en ce que l'on utilise, comme structures métalliques conductrices, des feuilles, des tôles ou des plaques métalliques (5).

6. Dispositif selon l'une des revendications 1 à 5, caractérisé en ce que les structures conductrices (2) sont encastrées dans les parois latérales de la chambre de décharge (1), à une distance de la surface intérieure de cette chambre (1) de décharge, suffisante pour l'isolation.

7. Dispositif selon l'une des revendications 1 à 5, caractérisé en ce que les structures conductrices (5) sont montées à l'extérieur sur la chambre (1) de décharge.

8. Dispositif selon l'une des revendications 2 à 7, caractérisé en ce que la paroi de la chambre en matériau isolant qui porte l'une des électrodes (3b) est supprimée et que la plaque (2b) ou la tôle métallique forme la cloison de séparation.

9. Dispositif selon l'une des revendications 1 à 8, caractérisé en ce que la chambre de décharge (1) et le système (6, 7) de circulation du gaz et de refroidissement forment deux sous-ensembles séparés que l'on peut assemble d'une façon étanche aux gaz.

Fig. 1

Fig.2

EP 0 126 735 B2

Fig.3

Fig. 4

Fig.5